# FASCICULE DE BREVET EUROPEEN

(11) **EP 4 532 326 B1**
(45) Date de publication et mention de la délivrance du brevet: **11.03.2026**
(21) Numéro de dépôt: 23730854.9
(22) Date de dépôt: 29.05.2023
(51) Int. Cl.: B64D 15/04, F02C 9/18

(54) **ENSEMBLE PROPULSIF AMÉLIORÉ POUR AÉRONEF MULTI MOTEURS**
VERBESSERTES ANTRIEBSSYSTEM FÜR MEHRMOTORIGE FLUGZEUGE
IMPROVED PROPULSION SYSTEM FOR MULTI-ENGINE AIRCRAFT

(30) Priorité: 31.05.2022 FR 2205194
(43) Date de publication de la demande: 09.04.2025
(73) Titulaire: Safran Helicopter Engines, 64510 Bordes (FR)
(72) Inventeur: VINCENZOTTO, Quentin, 77550 MOISSY-CRAMAYEL (FR); BEDRINE, Olivier, 77550 MOISSY-CRAMAYEL (FR)
(74) Mandataire: Cabinet Beau de Loménie
(86) Numéro de dépôt international: PCT/FR2023/050748
(87) Numéro de publication internationale: WO 2023/233097

(56) Documents cités:
- US-A1- 2019 368 417
- US-A1- 2020 378 314
- US-A1- 2021 108 571

## Description

### Domaine Technique

La présente invention concerne le domaine des aéronefs comprenant au moins deux moteurs tels que des turbomoteurs ou des turbopropulseurs, pour des engins volants tels des hélicoptères ou avions bimoteurs. En particulier, l'invention concerne la gestion thermique des composants d'un ensemble propulsif pour aéronef multi moteurs, notamment bimoteur, et un procédé de gestion thermique d'un tel ensemble propulsif.

### Technique antérieure

La plupart des hélicoptères comportent deux turbomachines ou plus, par exemple des turbomoteurs ou des turbopropulseurs, comprenant chacune une turbine à gaz. C'est le cas notamment des hélicoptères bimoteurs ou multi moteurs. De tels aéronefs permettent un fonctionnement en mode économique, dit mode « ECO ». Le mode ECO est un mode de fonctionnement, correspondant généralement à une phase de vol de croisière, d'une architecture bimoteur dans laquelle une des turbines à gaz est en régime de veille (ou mode « stand-by » en anglais), c'est-à-dire est arrêtée (chambre de combustion arrêtée, ou « OFF », avec le générateur de gaz pouvant être entrainé à une certaine vitesse via une machine électrique) ou fonctionne à un régime de super ralenti à très faible vitesse (chambre de combustion allumée, ou « ON »), par exemple à une vitesse de rotation inférieure à 40% de la vitesse de rotation nominale, l'autre turbine à gaz assurant l'intégralité de la fourniture de puissance.

Ce mode permet d'optimiser la consommation spécifique, qui diminue avec la puissance fournie par une turbomachine. En effet, la consommation spécifique d'une turbine diminuant avec la puissance fournie, il est préférable de fournir 100% de la puissance avec une turbine, plutôt que 50% par chacune d'entre elle. Le document FR2967133A1 décrit un exemple d'application du mode ECO sur un hélicoptère bimoteur.

Toutefois, en fonction des conditions climatiques opérationnelles, le mode ECO peut conduire à des conditions favorables à la formation de givre dans la veine d'air du moteur fonctionnant en régime de veille, c'est-à-dire arrêté ou tournant à un régime de super ralenti. Ce moteur n'étant pas en capacité de s'autoalimenter pour assurer son antigivrage, la température de ses propres pièces ou composants ne peut plus prévenir l'apparition de givre. Par ailleurs, lors d'un fonctionnement en mode ECO, lorsque l'un des deux moteurs est arrêté (chambre de combustion « OFF »), la température de la chambre de combustion de ce moteur ne permettra pas un rallumage normal ou rapide de celui-ci en cas de nécessité.

Des dispositifs de circulation d'air chaud sur les hélicoptères bimoteurs existent, permettant le prélèvement sur l'un ou sur les deux moteurs d'air chaud provenant de différents endroits dans la veine d'écoulement d'air chaud de ces moteurs. Pour ce faire, ces dispositifs comprennent, pour chaque moteur, un canal de prélèvement ayant une électrovanne (ou « SOV » pour « ShutOff Valve » en anglais) permettant d'activer ou désactiver le prélèvement d'air sur le moteur concerné, et un clapet anti-retour assurant une non-recirculation de l'air vers le moteur, empêchant ainsi les transferts d'air entre les deux moteurs. US 2020/378314 A1, US 2019/368417 A1 et US 2021/108571 A1 divulguent des exemples de dispositifs de circulation d'air pour aéronefs bimoteurs.

Cet air chaud prélevé peut être utilisé notamment pour la pressurisation ou la climatisation. Cependant, les dispositifs de circulation d'air chaud existants ne permettent pas de gérer les problèmes mentionnés ci-dessus tels que l'accumulation de givre, liés à la thermique des composants du moteur fonctionnant en régime de veille. Il existe donc un besoin pour une solution répondant au moins en partie aux inconvénients précités.

### Exposé de l'invention

Le présent exposé concerne un ensemble propulsif pour aéronef, notamment d'hélicoptère multi-moteurs, l'ensemble propulsif tel que défini dans la revendication 1 comprenant :
- au moins un premier moteur et un deuxième moteur configurés pour fonctionner dans au moins un régime de veille,
- un dispositif primaire de circulation d'air configuré pour prélever de l'air dans le premier moteur via un premier canal de prélèvement et/ou dans le deuxième moteur via un deuxième canal de prélèvement pour l'acheminer vers un équipement de l'ensemble propulsif, et
- un dispositif secondaire de circulation d'air configuré pour, lorsque l'un du premier ou du deuxième moteur fonctionne dans le au moins un régime de veille, prélever de l'air provenant de l'autre du premier ou du deuxième moteur ne fonctionnant pas en régime de veille et l'acheminer vers celui du premier ou du deuxième moteur fonctionnant en régime de veille.

Par « régime de veille », on comprend un régime dans lequel la chambre de combustion de la turbine à gaz de l'un des moteurs est éteinte, ou que le moteur fonctionne au super ralenti. Lorsqu'elle fonctionne au super ralenti, la chambre de combustion est allumée et les parties tournantes de la turbine à gaz tournent à une vitesse par exemple inférieure à 40% d'une vitesse de rotation nominale. On comprend ainsi que lorsque le premier moteur est en régime de veille, le deuxième moteur n'est pas en régime de veille et fournie l'intégralité de la puissance à l'aéronef, et inversement.

Dans le présent exposé, les termes « amont » et « aval » sont considérés selon le sens normal d'écoulement de l'air dans les différents canaux définis ci-après. Par exemple, dans le premier et le deuxième canal définis ci-après, le sens « amont-aval » correspond au sens allant du point de prélèvement sur le premier ou le deuxième moteur, vers l'équipement de l'ensemble propulsif. De même, dans le troisième canal défini ci-après, le sens « amont-aval » correspond au sens allant vers le point d'injection du premier ou du deuxième moteur.

Le dispositif primaire de circulation d'air est configuré pour prélever de l'air dans le premier et/ou le deuxième moteur, c'est-à-dire prélever de l'air chaud s'écoulant dans la veine d'air de ces moteurs, par exemple au niveau de la chambre de combustion. Pour ce faire, le premier moteur est équipé d'un premier canal de prélèvement, et le deuxième moteur est équipé d'un deuxième canal de prélèvement.

Le premier et le deuxième canal peuvent ensuite converger en se rejoignant au niveau d'un canal aval, ce dernier pouvant acheminer l'air prélevé dans le premier moteur et/ou dans le deuxième moteur vers un équipement de l'ensemble propulsif. On comprend ainsi que la quantité d'air acheminé vers ledit équipement via le canal aval est la somme des quantités d'air prélevé dans chacun du premier et du deuxième moteur.

L'équipement de l'ensemble propulsif, vers lequel est acheminé l'air du dispositif primaire de circulation d'air, peut être un dispositif de pressurisation, un climatiseur, un composant de l'ensemble propulsif à refroidir, les ailes ou les volets de l'aéronef.

En plus du dispositif primaire de circulation d'air, l'ensemble propulsif comprend un dispositif secondaire de circulation d'air. Contrairement au dispositif primaire, ce dispositif secondaire permet un transfert d'air chaud s'écoulant dans la veine d'écoulement d'air de l'un des deux moteurs, vers la veine d'écoulement d'air de l'autre des deux moteurs. En d'autres termes, le dispositif secondaire de circulation d'air permet de prélever de l'air dans le moteur actif (par exemple le premier moteur), c'est-à-dire le moteur ne fonctionnant pas en régime de veille et fournissant l'intégralité de la puissance, et d'acheminer l'air prélevé jusqu'au moteur fonctionnant en régime de veille (par exemple le deuxième moteur).

Ainsi, lorsqu'il est détecté, au cours d'un vol de croisière, que des conditions susceptibles de provoquer la formation de givre sur certains composants du moteur fonctionnant en régime de veille, il est possible, par l'intermédiaire du dispositif secondaire de circulation d'air, d'utiliser l'air chaud disponible sur le moteur actif, et ainsi de limiter la formation du givre dans le moteur en régime de veille. Par ailleurs, l'injection d'air chaud dans la chambre de combustion du moteur fonctionnant en régime de veille peut également permettre de maintenir ladite chambre de combustion à une température plus élevée, permettant un démarrage plus facile et plus rapide du moteur en cas de nécessité, par exemple en cas de défaillance du moteur actif.

Dans certains modes de réalisation, le premier et le deuxième canal de prélèvement sont configurés pour prélever de l'air du premier et du deuxième moteur en un premier point de prélèvement du premier et du deuxième moteur respectivement, le dispositif secondaire de circulation d'air comprenant un troisième canal de prélèvement configuré pour prélever de l'air de l'un du premier ou du deuxième moteur en un deuxième point de prélèvement dudit premier ou du deuxième moteur, et pour acheminer l'air jusqu'à un point d'injection de l'autre du premier ou du deuxième moteur, le point d'injection étant distinct du premier point de prélèvement.

On notera que, dans les configurations d'aéronefs bimoteurs équipés d'un dispositif de circulation d'air chaud, les moteurs peuvent être équipés d'un double bossage de prélèvement d'air. Ainsi, le premier point de prélèvement de chacun du premier et du deuxième moteur peut être l'un de ces deux bossages de prélèvement d'air. De même, le deuxième point de prélèvement, distinct du premier point de prélèvement, et le point d'injection du troisième canal de prélèvement, peuvent être sur l'autre de ces deux bossages de prélèvement d'air respectivement.

En d'autres termes, selon ce mode de réalisation, le dispositif secondaire de circulation d'air est distinct du dispositif primaire de circulation d'air, le deuxième point de prélèvement du troisième canal de prélèvement dans l'un des deux moteurs et le point d'injection du troisième canal de prélèvement dans l'autre des deux moteurs étant distincts et de préférence à distance des premiers points de prélèvement du dispositif primaire de circulation d'air. Il est ainsi possible d'utiliser l'air chaud disponible sur le moteur actif, et ainsi de limiter la formation du givre dans le moteur en régime de veille, sans modifier le dispositif primaire de circulation d'air existant.

Dans certains modes de réalisation, l'air est acheminé jusqu'à au moins un point d'injection de celui du premier ou du deuxième moteur fonctionnant en régime de veille, le point d'injection étant situé sur un organe dudit moteur, l'organe étant l'un parmi un compresseur, une chambre de combustion, une aube directrice d'entrée (ou « IGV » pour « inlet guide vane » en anglais), ou une entrée d'air.

Dans certains modes de réalisation, le premier et le deuxième moteur comprennent un compresseur, le deuxième point de prélèvement étant disposé en sortie du compresseur, ou entre deux étages du compresseur. Le deuxième point de prélèvement peut être positionné en fonction du besoin de débit et/ou de température de l'air.

Dans certains modes de réalisation, le point d'injection est disposé de manière à injecter l'air dans une entrée d'air du premier ou du deuxième moteur, entre des étages du compresseur, ou dans la chambre de combustion.

Dans certains modes de réalisation, le troisième canal de prélèvement comprend une électrovanne et un clapet anti retour.

L'électrovanne, pouvant être pilotée par une unité de contrôle, permet d'activer ou désactiver le prélèvement d'air sur le moteur actif. Par ailleurs, le clapet anti-retour, disposé en aval de l'électrovanne, assure une non-recirculation de l'air et empêche les transferts du moteur qui est sorti du régime de veille vers le moteur actif. On comprend ainsi que cette configuration est asymétrique, le transfert d'air ne pouvant se faire que du premier moteur (par exemple) vers le deuxième moteur, et pas l'inverse. En d'autres termes, seul le deuxième moteur est prévu pour fonctionner en régime de veille. Cette configuration permet de simplifier la mise en œuvre du dispositif secondaire de circulation d'air, ne nécessitant que l'ajout d'un couple électrovanne/clapet anti retour.

Le dispositif secondaire de circulation d'air comprend un dispositif de dérivation disposé sur l'un du premier ou du deuxième canal de prélèvement.

Selon ce mode de réalisation, le dispositif secondaire de circulation n'est pas distinct du dispositif primaire de circulation, mais implique une modification de ce dernier, par l'ajout du dispositif de dérivation. Ainsi, contrairement à l'architecture définie précédemment, il n'est pas nécessaire dans ce cas de figure que chaque moteur comprenne un double bossage de prélèvement d'air, puisque le prélèvement et l'injection d'air dans le moteur fonctionnant en régime de veille peuvent être réalisés aux mêmes emplacements que le dispositif primaire de circulation. De manière alternative, l'un des deux bossages peut être obturé.

Cela permet d'obtenir les effets techniques précités, liés notamment à l'anti givrage des composants du moteur fonctionnant en régime de veille, tout en simplifiant l'architecture globale de l'ensemble propulsif, et en limitant notamment l'encombrement impliqué par les dispositifs de circulation d'air.

Dans certains modes de réalisation, le dispositif de dérivation est configuré pour permettre un écoulement d'air provenant de l'un du premier ou du deuxième moteur ne fonctionnant pas en régime de veille vers l'autre du premier ou du deuxième moteur fonctionnant en régime de veille, tout en empêchant un écoulement d'air dans un sens opposé.

En d'autres termes, le dispositif de dérivation est configuré de telle sorte à permettre un écoulement du moteur actif vers le moteur fonctionnant en régime de veille lorsque cela est nécessaire et, lorsqu'un tel écoulement a lieu, empêcher l'écoulement d'air en sens inverse, c'est-à-dire vers le moteur actif, notamment lorsque le moteur fonctionnant en régime de veille sort de ce régime de veille et repasse dans un régime de fonctionnement nominal. Ainsi, bien que le dispositif de dérivation soit disposé sur le dispositif primaire de circulation, il est possible, hors mode ECO, de prélever de l'air sur les deux moteurs par le dispositif primaire de circulation, et en mode ECO, de transférer de l'air du moteur actif vers le moteur en régime de veille par le dispositif secondaire de circulation.

Le premier et le deuxième canal de prélèvement comprennent une électrovanne et un clapet anti retour, le dispositif de dérivation comprenant un canal de dérivation comprenant une électrovanne, une première extrémité du canal de dérivation étant en communication avec ledit premier ou deuxième canal de prélèvement en aval du clapet anti retour dudit premier ou deuxième canal de prélèvement.

On comprend que la première extrémité du canal de dérivation communique avec le premier canal de dérivation (par exemple), en aval du clapet anti retour, lui-même en aval de l'électrovanne du premier canal de dérivation selon le sens d'écoulement de l'air dans le premier canal de dérivation depuis le premier moteur. Ainsi, l'air ne peut pas s'écouler vers le premier moteur en régime de veille via le premier canal de prélèvement uniquement compte tenu de la présence du clapet anti retour, mais peut le faire via le canal de dérivation en ouvrant l'électrovanne dudit canal de dérivation.

Dans certains modes de réalisation, une deuxième extrémité du canal de dérivation est en communication avec ledit premier ou deuxième canal de prélèvement entre l'électrovanne et le clapet anti retour dudit premier ou deuxième canal de prélèvement.

Cette configuration permet de contourner le clapet anti retour du premier canal de prélèvement (par exemple). Ainsi, l'air peut s'écouler du moteur actif (le deuxième moteur dans cet exemple) jusqu'au moteur en régime de veille (le premier moteur dans cet exemple), via le canal de dérivation puis le premier canal de prélèvement, en ouvrant l'électrovanne du canal de dérivation et du premier canal de prélèvement respectivement.

Dans certains modes de réalisation, le premier et le deuxième canal de prélèvement sont configurés pour prélever de l'air du premier et du deuxième moteur en un point de prélèvement du premier et du deuxième moteur respectivement, le canal de dérivation comprenant un clapet anti retour monté en opposition avec le clapet anti retour du premier ou du deuxième canal de prélèvement, une deuxième extrémité du canal de dérivation étant en communication avec ledit premier ou deuxième canal de prélèvement, entre l'électrovanne et le point de prélèvement dudit premier ou deuxième canal de prélèvement.

On comprend par « monter en opposition » que lorsque de l'air s'écoule dans un premier sens d'écoulement, depuis le moteur en régime de veille, il peut s'écouler dans le premier canal de prélèvement (par exemple), mais pas dans le canal de dérivation compte tenu de la présence du clapet anti retour. A l'inverse, lorsque de l'air s'écoule dans un deuxième sens d'écoulement opposé au premier sens, vers le moteur en régime de veille, il peut s'écouler dans le canal de dérivation, mais pas dans le premier canal de prélèvement compte tenu de la présence du clapet anti retour.

De plus, la deuxième extrémité communiquant avec le premier canal de prélèvement (par exemple) entre l'électrovanne du premier canal de prélèvement et le point de prélèvement, il est ainsi possible, en mode ECO, d'injecter de l'air provenant du moteur actif dans le moteur en régime de veille, au même point (le point de prélèvement) par lequel est prélevé l'air en dehors du mode ECO. Cela permet de limiter les modifications des moteurs et par conséquent de simplifier l'architecture de l'ensemble propulsif.

Le présent exposé concerne également un ensemble propulsif pour aéronef, notamment d'hélicoptère multi-moteurs, tel que défini dans la revendication 5, dans lequel le premier et le deuxième canal de prélèvement sont configurés pour prélever de l'air du premier et du deuxième moteur en un point de prélèvement du premier et du deuxième moteur respectivement, le canal de dérivation comprenant un clapet anti retour monté en opposition avec le clapet anti retour du premier ou du deuxième canal de prélèvement, une deuxième extrémité du canal de dérivation étant configuré pour injecter de l'air dans celui du premier ou du deuxième moteur fonctionnant en régime de veille, en un point d'injection distinct du point de prélèvement.

Le fait de disposer la deuxième extrémité du canal de dérivation, non pas sur le premier canal de prélèvement (par exemple) mais en un point d'injection du moteur en régime de veille distinct du point de prélèvement, permet de choisir librement ledit point d'injection en fonction de la zone ou des composants du moteur à réchauffer.

Le canal de dérivation comprend un limitateur disposé entre le clapet anti retour et le point d'injection, le limitateur étant configuré pour réguler un débit d'air s'écoulant dans le canal de dérivation.

Le limitateur peut être disposé en aval du clapet anti retour du canal de dérivation, et peut être un étranglement réglable du canal de dérivation, permettant de réguler le débit d'air injecté dans le moteur en régime de veille, en fonction des températures des zones ou des composants du moteur à réchauffer. Le limitateur peut en outre être piloté par une unité de contrôle.

Le présent exposé concerne également un ensemble propulsif pour aéronef, notamment d'hélicoptère multi-moteurs, tel que défini dans la revendication 6, dans lequel le premier et le deuxième canal de prélèvement comprennent une vanne trois voies et un clapet anti retour, le dispositif de dérivation comprenant un canal de dérivation, une première extrémité du canal de dérivation étant en communication avec ledit premier ou deuxième canal de prélèvement en aval du clapet anti retour dudit premier ou deuxième canal de prélèvement, une deuxième extrémité du canal de dérivation étant connectée à la vanne trois voies, la vanne trois voies étant mobile entre une première position permettant un écoulement d'air dans ledit premier ou deuxième canal de prélèvement et empêchant un écoulement d'air dans le canal de dérivation, et une deuxième position empêchant un écoulement d'air dans ledit premier ou deuxième canal de prélèvement et permettant un écoulement d'air dans le canal de dérivation.

La vanne trois voies peut être pilotée par une unité de contrôle, pour passer de la première à la deuxième position, en mode ECO et hors mode ECO. Cette configuration permet de simplifier la structure du canal de dérivation, ne nécessitant pas d'électrovanne, une seule vanne (la vanne trois voies) étant nécessaire.

Le présent exposé concerne également un ensemble propulsif pour aéronef, notamment d'hélicoptère multi-moteurs, tel que défini dans la revendication 7, dans lequel le premier et le deuxième canal de prélèvement comprennent une électrovanne, le dispositif de dérivation comprenant un clapet anti retour mobile disposé sur le premier ou sur le deuxième canal de prélèvement, le clapet anti retour mobile étant mobile entre une première position permettant un écoulement d'air dans ledit premier ou deuxième canal de prélèvement dans un premier sens de circulation et empêchant un écoulement d'air dans un deuxième sens de circulation opposé au premier sens, et une deuxième position permettant un écoulement d'air dans le deuxième sens de circulation et empêchant un écoulement d'air dans le premier sens de circulation.

Le clapet anti retour mobile peut être piloté par une unité de contrôle, de manière à pivoter sur lui-même pour passer de la première à la deuxième position, en mode ECO et hors mode ECO. Plus précisément, hors mode ECO, l'air peut être prélevé dans le premier moteur (par exemple) en s'écoulant dans le premier canal de prélèvement, le clapet anti retour mobile étant dans la première position empêchant un air retour de l'air vers le moteur. A l'inverse, en mode ECO, le clapet anti retour mobile est disposé dans la deuxième position, de sorte à permettre un écoulement de l'air provenant du deuxième moteur actif vers le premier moteur en régime de veille, la deuxième position empêchant par ailleurs un retour de l'air vers le deuxième moteur.

Cette configuration permet de s'affranchir de l'utilisation d'un canal de dérivation, simplifiant ainsi davantage l'architecture de l'ensemble propulsif. On comprend à cet égard que l'écoulement du moteur actif vers le moteur en régime de veille en mode ECO est permis par la différence de pression existant entre ces moteurs, et par le clapet anti retour mobile disposé dans sa deuxième position, l'électrovanne étant par ailleurs ouverte.

Le présent exposé concerne également un ensemble propulsif pour aéronef, notamment d'hélicoptère multi-moteurs, tel que défini dans la revendication 8, dans lequel le premier et le deuxième canal de prélèvement comprennent une électrovanne, le dispositif de dérivation comprenant un clapet anti retour blocable disposé sur le premier ou sur le deuxième canal de prélèvement, le clapet anti retour blocable étant configuré pour être bloqué dans une position d'ouverture permettant un écoulement d'air dans deux sens de circulation.

Le clapet anti retour blocable peut être piloté par une unité de contrôle, de manière à pouvoir être bloqué en position d'ouverture et permettre ainsi un écoulement d'air dans les deux sens de circulation. Plus précisément, hors mode ECO, l'air peut être prélevé dans le premier moteur (par exemple) en s'écoulant dans le premier canal de prélèvement, le clapet anti retour blocable empêchant un air retour de l'air vers le moteur. A l'inverse, en mode ECO, le clapet anti retour blocable est bloqué en position d'ouverture, de sorte à permettre un écoulement de l'air provenant du deuxième moteur actif vers le premier moteur en régime de veille.

Dans ce cas de figure, l'écoulement du moteur actif vers le moteur en régime de veille en mode ECO est permis par la différence de pression existant entre ces moteurs, et par le clapet anti retour bloqué en position d'ouverture. Cette configuration permet de s'affranchir de l'utilisation d'un canal de dérivation, simplifiant ainsi davantage l'architecture de l'ensemble propulsif.

Le présent exposé concerne également un aéronef comprenant un ensemble propulsif selon l'un quelconque des modes de réalisation précédents, l'aéronef étant un hélicoptère multi moteurs, notamment bimoteur.

Le présent exposé concerne également un procédé de gestion thermique d'un ensemble propulsif selon l'un quelconque des modes de réalisation précédents, comprenant :
- la détection d'un fonctionnement dans au moins un régime de veille de l'un du premier moteur ou du deuxième moteur,
- la mesure de la température d'au moins un composant dudit premier moteur ou deuxième moteur fonctionnant dans le régime de veille, et
- si la température mesurée est inférieure ou égale à une valeur seuil prédéterminée, le prélèvement d'air dans l'autre du premier moteur ou du deuxième moteur ne fonctionnant pas en régime de veille, et l'acheminement de l'air vers celui du premier moteur ou du deuxième moteur fonctionnant en régime de veille, par l'intermédiaire du dispositif secondaire de circulation d'air.

Le mode ECO implique que l'un du premier moteur ou du deuxième moteur est en régime de veille. Des conditions givrantes peuvent alors se produire dans ce moteur. Pour détecter de telles conditions, des capteurs de température tels que des thermocouples peuvent être disposés au sein du moteur en régime de veille notamment sur un ou plusieurs composant(s) de ce moteur, ou au sein de la chambre de combustion. Ces capteurs peuvent être connectés à une unité de contrôle qui détermine si l'un au moins des capteurs relève une température inférieure ou égale à une valeur seuil prédéterminée, indiquant par exemple la possibilité d'apparition de givre. Dans ce cas, l'unité de contrôle commande l'ouverture de l'électrovanne du dispositif secondaire de circulation d'air, ou de la vanne trois voie, ou du clapet anti retour mobile, ou encore du clapet anti retour blocable, pour permettre l'écoulement d'air du moteur actif vers le moteur en régime de veille.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue en coupe d'un ensemble propulsif pour aéronef bimoteur selon un premier mode de réalisation de l'invention,
[Fig. 2] La figure 2 représente une vue en coupe d'un ensemble propulsif pour aéronef bimoteur selon un deuxième mode de réalisation de l'invention,
[Fig. 3] La figure 3 représente une partie isolée du premier canal de prélèvement de l'ensemble propulsif de la figure 2, selon un premier exemple modifié du deuxième mode de réalisation,
[Fig. 4] La figure 4 représente une partie isolée du premier canal de prélèvement de l'ensemble propulsif de la figure 2, selon un deuxième exemple modifié du deuxième mode de réalisation,
[Fig. 5] La figure 5 représente une partie isolée du premier canal de prélèvement de l'ensemble propulsif de la figure 2, selon un troisième exemple modifié du deuxième mode de réalisation,
[Fig. 6] La figure 6 représente une partie isolée du premier canal de prélèvement de l'ensemble propulsif de la figure 2, selon un quatrième exemple modifié du deuxième mode de réalisation,
[Fig. 7] La figure 7 représente une partie isolée du premier canal de prélèvement de l'ensemble propulsif de la figure 2, selon un cinquième exemple modifié du deuxième mode de réalisation,
[Fig. 8] La figure 8 représente une partie isolée du premier canal de prélèvement de l'ensemble propulsif de la figure 2, selon un sixième exemple modifié du deuxième mode de réalisation,
[Fig. 9] La figure 9 représente schématiquement les différentes étapes d'un procédé de gestion thermique d'un ensemble propulsif selon l'invention.

### Description des modes de réalisation

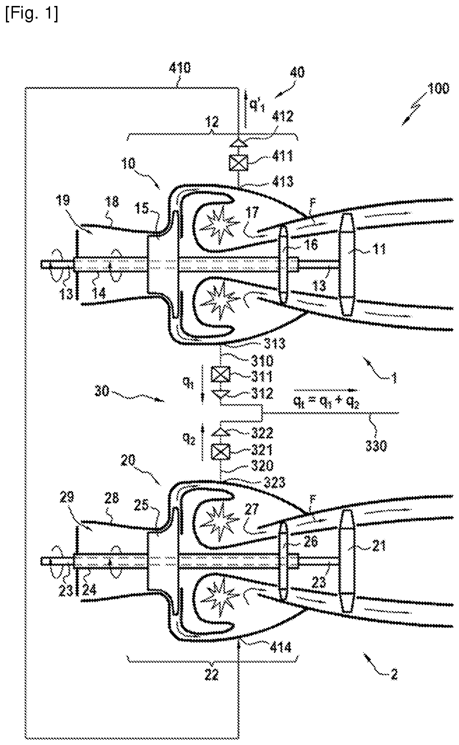

Une architecture d'un ensemble propulsif 100 selon un premier mode de réalisation de l'invention va être décrite dans la suite de la description, en référence à la figure 1.

La figure 1 représente de façon schématique un ensemble propulsif 100 d'un aéronef bimoteur, comprenant une première turbomachine 1 et une deuxième turbomachine 2, entrainant en rotation des organes de transmissions d'un hélicoptère portant une hélice ou un rotor principal (non représentés). Les turbomachines 1, 2 peuvent être des turbomoteurs ou des turbopropulseurs, et seront plus simplement nommées respectivement premier moteur 1 et deuxième moteur 2 dans la suite de la description. Bien que l'ensemble propulsif décrit dans la suite de la description comprenne deux moteurs, cet exemple n'est pas limitatif, l'invention s'appliquant également aux ensembles propulsif d'aéronefs multi moteurs comprenant plus de deux moteurs.

Le premier moteur 1 et le deuxième moteur 2 sont de préférence identiques et présentent les mêmes caractéristiques. Aussi, la description ci-dessous fait référence à la fois au premier et au deuxième moteur 1, 2.

Le premier moteur 1 et le deuxième moteur 2 comprennent respectivement une turbine à gaz 10, 20 ayant un générateur de gaz 12, 22 et une turbine libre 11, 21 apte à être entraînée en rotation par un flux de gaz généré par le générateur de gaz 12, 22. La turbine libre 11, 21 est montée sur un arbre 13, 23 qui transmet le mouvement de rotation à un organe récepteur tel un rotor principal de l'hélicoptère (non représenté).

Le générateur de gaz 12, 22 comporte un arbre rotatif 14, 24 sur lequel sont montés un compresseur 15, 25 et une turbine 16, 26, ainsi qu'une chambre de combustion 17, 27 disposée axialement entre le compresseur 15, 25 et la turbine 16, 26 dès lors que l'on considère le générateur de gaz 12, 22 selon la direction axiale de l'arbre rotatif 14, 24. La turbine à gaz 10, 20 présente un carter 18, 28 muni d'une entrée d'air 19, 29 par laquelle l'air frais entre dans le générateur de gaz 12, 22. Après son admission dans l'enceinte du générateur de gaz 12, 22, l'air frais est comprimé par le compresseur 15, 25 qui le refoule vers l'entrée de la chambre de combustion 17, 27 dans laquelle il est mélangé avec du carburant. La combustion qui a lieu dans la chambre de combustion 17, 27 provoque l'évacuation à grande vitesse des gaz brûlés vers la turbine 16, 26, ce qui a pour effet d'entraîner en rotation de l'arbre 14, 24 du générateur de gaz 12, 22 et, par conséquent, le compresseur 15, 25. La vitesse de rotation de l'arbre 14, 24 du générateur de gaz 12, 22 est déterminée par le débit de carburant entrant dans la chambre de combustion 17, 27.

Malgré l'extraction d'énergie cinétique par la turbine 16, 26, le flux de gaz sortant du générateur de gaz présente une énergie cinétique significative. Comme on le comprend à l'aide de la figure 1, le flux de gaz F est dirigé vers la turbine libre 11, 21 ce qui a pour effet de provoquer une détente dans la turbine libre 11, 21 conduisant à la mise en rotation de la roue de turbine et de l'arbre 13, 23.

L'ensemble propulsif 100 comporte en outre un dispositif primaire de circulation d'air 30, permettant de prélever de l'air chaud s'écoulant dans la veine d'air du premier moteur 1 et/ou du deuxième moteur 2, pour l'acheminer vers un équipement (non représenté) de l'ensemble propulsif 100, pouvant être un dispositif de pressurisation, un climatiseur, un composant de l'ensemble propulsif à refroidir, les ailes ou les volets de l'aéronef.

Pour ce faire, le dispositif primaire de circulation d'air 30 comprend un premier canal de prélèvement 310 pour prélever de l'air dans le premier moteur 1, et un deuxième canal de prélèvement 320 pour prélever de l'air dans le deuxième moteur 2. Le premier et le deuxième canal de prélèvement 310, 320 se rejoignent ensuite au niveau d'un embranchement à partir duquel s'étend un canal aval 330, menant audit équipement de l'ensemble propulsif 100.

On notera par ailleurs que les termes « amont » et « aval » sont considérés selon le sens normal d'écoulement de l'air dans les différents canaux, ce sens d'écoulement étant par ailleurs symbolisé par des flèches sur figure 1 et les figures suivantes.

Le prélèvement d'air chaud dans le premier moteur 1 par le premier canal de prélèvement 310 s'effectue en un premier point de prélèvement 313, disposé par exemple au regard de la chambre de combustion 17. De même, le prélèvement d'air chaud dans le deuxième moteur 2 par le deuxième canal de prélèvement 320 s'effectue en un premier point de prélèvement 323, disposé par exemple au regard de la chambre de combustion 27.

Pour permettre ce prélèvement, le premier et le deuxième canal 310, 320 comprennent respectivement une électrovanne 311, 321, et un clapet anti retour 312, 322 disposé en aval de l'électrovanne 311, 321. On notera que les électrovannes 311, 321, de même que les vannes trois voies ou les clapets anti retour mobile et blocable décrits dans la suite de la description peuvent être contrôlés par une unité de contrôle (non représentée), pouvant être un « FADEC » (acronyme anglais de « Full Authority Digital Engine Control »).

Ainsi, les électrovannes 311, 321 peuvent être contrôlées indépendamment l'une de l'autre, pour pouvoir prélever un débit d'air chaud q₁ et q₂ respectivement dans le premier et/ou dans le deuxième moteur 1, 2. Par conséquent, le débit total qt d'air chaud s'écoulant dans le canal aval 330 vers l'équipement de l'ensemble propulsif 100 est la somme des débits q₁ et q₂ s'écoulant dans le premier et le deuxième canal de prélèvement 310 et 320 respectivement, c'est-à-dire qₜ = q₁ + q₂.

Par ailleurs, cette architecture bimoteur permet un mode de fonctionnement économique, nommé mode « ECO » dans la suite de la description, dans lequel l'un des deux moteurs fonctionne en régime de veille, c'est-à-dire est arrêté (chambre de combustion « OFF ») ou tourne à un régime de super ralenti (par exemple à une vitesse de rotation inférieure à 40% de la vitesse de rotation nominale), alors que l'autre moteur fournie l'intégralité de la puissance. Dans le premier mode de réalisation décrit en référence à la figure 1, le moteur fonctionnant en régime de veille est le deuxième moteur 2, le premier moteur 1 fournissant l'intégralité de la puissance. Cet exemple n'est cependant pas limitatif, cette configuration pouvant être inversée sans sortir du cadre de l'invention.

Lors d'un fonctionnement en mode ECO, l'électrovanne 321 du deuxième moteur est fermée, de telle sorte que le débit d'air q₂ fourni par le deuxième moteur 2 est nul, c'est-à-dire q₂ = 0, de telle sorte que qₜ = q₁. Dans cette configuration, lors d'un vol de croisière, des conditions dans lesquelles du givre peut apparaître sur des composants du deuxième moteur 2 sont susceptibles de se produire. Par ailleurs, la température basse au sein de la chambre de combustion 27 ne permet pas un démarrage facile et rapide du deuxième moteur 2 en cas de nécessité.

On notera que ces conditions dites conditions de vol givrantes, ou la nécessité de réchauffer la chambre de combustion 27, peuvent être déterminés par des capteurs tels que des thermocouples (non représentés) disposés dans le deuxième moteur 2, et relié à l'unité de contrôle.

Pour limiter les inconvénients liés à ces conditions, l'ensemble propulsif 100 est équipé d'un dispositif secondaire de circulation d'air 40 comprenant, selon le premier mode de réalisation, un troisième canal de prélèvement 410, reliant le premier moteur 1 au deuxième moteur 2.

En particulier, le troisième canal de prélèvement 410 est configuré pour prélever de l'air chaud dans le premier moteur 1, par l'intermédiaire d'un deuxième point de prélèvement 413, distinct du premier point de prélèvement 313. Le premier moteur 1 peut par exemple comprendre deux bossages de prélèvement d'air, le premier point de prélèvement 313 étant connecté à l'un des deux bossages, et le deuxième point de prélèvement 413 étant connecté à l'autre des deux bossages.

Par ailleurs, le troisième canal de prélèvement 410 est configuré pour acheminer l'air chaud et l'injecter dans le deuxième moteur 2, par l'intermédiaire d'un point d'injection 414, distinct du premier point de prélèvement 323 du deuxième moteur 2. Le deuxième moteur 2 peut par exemple comprendre, de la même manière que le premier moteur 1, deux bossages de prélèvement d'air, le premier point de prélèvement 323 étant connecté à l'un des deux bossages, et le point d'injection 414 étant connecté à l'autre des deux bossages.

Les emplacements du prélèvement par le deuxième point de prélèvement 413, et de l'injection par le point d'injection 414, peuvent être déterminés en fonction des besoins d'antigivrage ou de maintien en température des composants du deuxième moteur 2, et donc des besoins en température et/ou en débit de l'air.

En particulier, le choix de la position du deuxième point de prélèvement 413 peut être déterminé en tenant compte d'un optimum entre le besoin d'énergie nécessaire au réchauffement du deuxième moteur 2 en régime de veille et de l'impact sur la performance du premier moteur 1 actif. Ainsi, le prélèvement de l'air sur le premier moteur peut se faire en sortie du compresseur 15, entre plusieurs étages du compresseur 15, ou au niveau de la chambre de combustion 17. Par ailleurs, l'injection de l'air dans le deuxième moteur 2 peut se faire au niveau de l'entrée d'air 29, via les circuits d'air présents dans les pales de pré-rotation, entre les étages du compresseur 25, ou autour de la chambre de combustion 27 via son carter, comme illustré sur la figure 1.

Afin de permettre le transfert d'un débit d'air q₁' du premier moteur 1 vers le deuxième moteur 2, le troisième canal de prélèvement 410 est équipé d'une électrovanne 411, et d'un clapet anti retour 412 en aval de l'électrovanne 411, selon le sens d'écoulement de l'air dans le troisième canal 410 du premier moteur 1 vers le deuxième moteur 2, symbolisé par la flèche à côté de la référence q₁' sur la figure 1. Ainsi, en mode ECO, alors que le dispositif primaire de circulation d'air 30 fournie un débit d'air qt = q₁, le premier moteur 1 actif fournie un débit d'air total q₁ + q₁', réparti entre le dispositif primaire de circulation d'air 30 et le dispositif secondaire de circulation d'air 40.

On notera que la quantité d'air prélevée et injectée par le dispositif secondaire de circulation d'air 40 dans le deuxième moteur 2 en régime de veille peut être dépendante des conditions extérieures et/ou des conditions givrantes et/ou de l'état thermique du deuxième moteur 2 ou d'autres paramètres pouvant être pertinents pour optimiser le besoin de débit d'air. Ce débit peut être géré via une position angulaire de l'électrovanne 411 contrôlée par l'unité de contrôle.

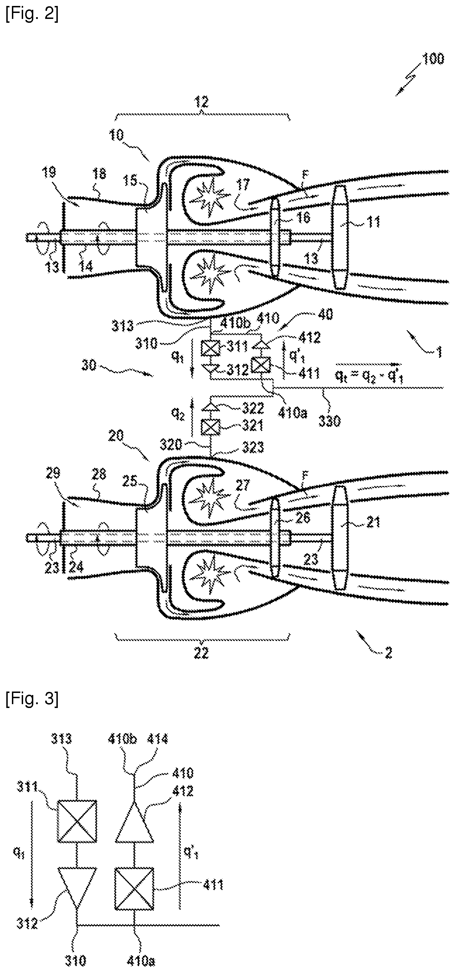

Une architecture d'un ensemble propulsif 100 selon un deuxième mode de réalisation de l'invention va être décrite dans la suite de la description, en référence aux figures 2 à 8. Les caractéristiques liées aux premier et deuxième moteurs 1, 2 sont identiques au premier mode de réalisation, et ne seront pas répétées à nouveau.

Selon le deuxième mode de réalisation, le dispositif secondaire de circulation d'air 40 est disposé sur le dispositif primaire de circulation d'air 30, impliquant une modification de ce dernier. On notera toutefois que le dispositif primaire de circulation d'air 30 selon le deuxième mode de réalisation comprend également un premier et un deuxième canal de prélèvement 310, 320, et un canal aval 330. Les premiers points de prélèvement 313, 323 peuvent également être identiques au premier mode de réalisation.

Dans le deuxième mode de réalisation, le moteur fonctionnant en régime de veille est le premier moteur 1, le deuxième moteur 2 fournissant l'intégralité de la puissance. Cet exemple n'est cependant pas limitatif, cette configuration pouvant être inversée sans sortir du cadre de l'invention. A cet égard, on comprend que le deuxième canal de prélèvement 320 est identique au premier mode de réalisation, et comprend notamment une électrovanne 321 et un clapet anti retour 322 en aval de cette dernière.

Le dispositif secondaire de circulation d'air 40 comprend un dispositif de dérivation, qui peut être disposé sur le premier canal de prélèvement 30 impliquant une modification de ce dernier par rapport au premier mode de réalisation, ou comprendre un canal de dérivation fixé au premier canal de prélèvement 30 sans modification de ce dernier par rapport au premier mode de réalisation, en fonction des exemples d'application du deuxième mode de réalisation décrits ci-après en références aux figures 2 à 8.

Dans un premier exemple représenté sur la figure 2, le dispositif de dérivation du dispositif secondaire de circulation d'air 40 comprend un canal de dérivation 410 disposé en parallèle du premier canal de prélèvement 310, qui est identique au premier canal de prélèvement 310 décrit en référence à la figure 1, comprenant notamment une électrovanne 311 et un clapet retour 312 en aval de cette dernière.

Le canal de dérivation 410 s'étend entre une première extrémité 410a communiquant avec le premier canal de prélèvement 310 en aval du clapet anti retour 312, et une deuxième extrémité 410b communiquant avec le premier canal de prélèvement 310, entre l'électrovanne 311 et le premier point de prélèvement 313. Le canal de dérivation 410 comprend en outre une électrovanne 411, et un clapet anti retour 412 disposé en aval de l'électrovanne 411 suivant le sens d'écoulement de l'air entre la première extrémité 410a et la deuxième extrémité 410b.

Le clapet anti retour 312 du premier canal de prélèvement 310 et le clapet anti retour 412 du canal de dérivation 410 sont montés en opposition l'un par rapport à l'autre. Ainsi, le clapet anti retour 412 du canal de dérivation 410 empêche les écoulements d'air depuis le premier point de prélèvement 313 vers le canal aval 330. En d'autres termes, l'air prélevé par le premier point de prélèvement 313 ne peut s'écouler vers le canal aval que par l'intermédiaire du premier canal de prélèvement 310. De même, le clapet anti retour 312 du premier canal de prélèvement 310 empêche les écoulements d'air depuis le deuxième moteur 2 vers le premier moteur 1. En d'autres termes, l'air provenant du deuxième moteur 2 ne peut s'écouler vers le premier moteur que par l'intermédiaire du canal de dérivation 410.

Ainsi, lorsque des conditions de vol givrantes sont détectées par l'unité de contrôle, cette dernière contrôle l'ouverture de l'électrovanne 411 du canal de dérivation 410, et de préférence également la fermeture du l'électrovanne 311 du premier canal de prélèvement 310. Compte tenu des différences de pressions existant entre le deuxième moteur 2 actif et le premier moteur 1 en régime de veille, une partie de l'air prélevée dans le deuxième moteur 2 par la première extrémité 323, est déviée vers le premier moteur 1 par l'intermédiaire du canal de dérivation 410, l'autre partie s'écoulant dans le canal aval 330. En outre, la deuxième extrémité 410b du canal de dérivation 410 débouchant dans le premier canal de prélèvement 310 entre l'électrovanne 311 et le premier point de prélèvement, l'air provenant du deuxième moteur 2 est injecté dans le premier moteur 1 par le premier point de prélèvement 313.

Par conséquent, en mode ECO représenté sur la figure 2, le débit d'air total s'écoulant dans le canal aval 330 est égal à qt = q₂ - q₁'. On notera que hors mode ECO, l'électrovanne 411 est fermée, et l'électrovanne 311 est ouverte, de telle sorte que q₁' = 0, et qₜ = q₁ + q₂.

Les figures 3 à 8 représentent des exemples modifiés du deuxième mode de réalisation. Sur ces figures, seuls le premier canal de prélèvement 310 et le canal de dérivation 410, lorsqu'un tel canal existe, sont représentés afin de simplifier la description de ces exemples. Toutefois, les autres éléments de l'ensemble propulsif 100 (notamment le deuxième canal de prélèvement 320 et le canal aval 330), bien que non représentés, sont également présents et demeurent identiques à la description qui en est faite ci-dessus, en référence à la figure 2.

L'exemple représenté sur la figure 3 diffère de l'exemple décrit en référence à la figure 2, en ce que la deuxième extrémité 410b du canal de dérivation 410 ne communique pas avec le premier canal de prélèvement 310, mais débouche directement dans le premier moteur 1, par l'intermédiaire d'un point d'injection 414, distinct du premier point de prélèvement 313. Par conséquent, selon cet exemple, l'air provenant du deuxième moteur 2 n'est pas injecté dans le premier moteur 1 par le même point de prélèvement d'air dans le premier moteur, à savoir le premier point de prélèvement 313, mais par un point d'injection 414 distinct de ce dernier.

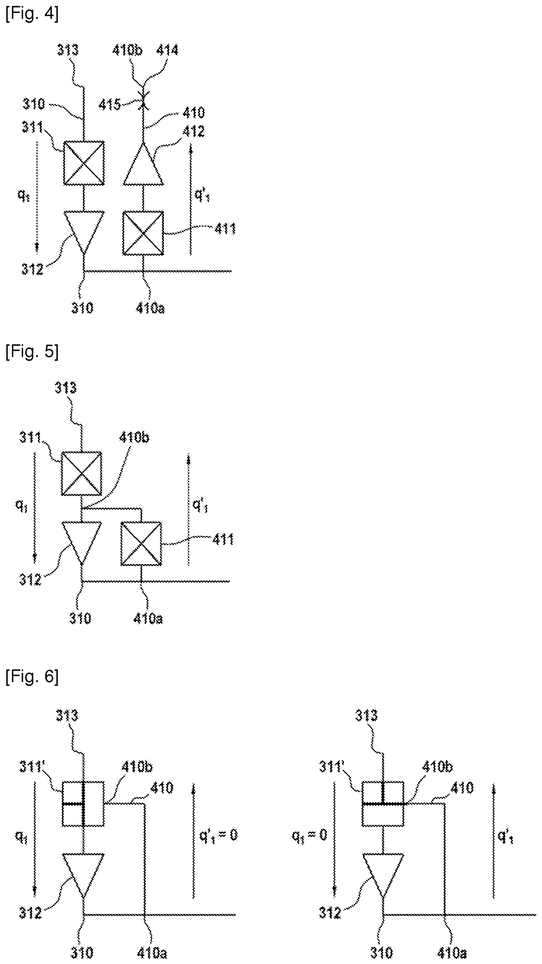

L'exemple représenté sur la figure 4 diffère de l'exemple décrit en référence à la figure 3, en ce que le canal de dérivation 410 comprend un limitateur 415 disposé en aval du clapet anti retour 412, plus précisément entre le clapet anti retour 412 et le point d'injection 414. Le limitateur 415 peut être un étranglement réglable de la section de passage du canal de dérivation 415, permettant de réguler le débit d'air injecté dans le premier moteur 1, en fonction des besoins en débit et en températures des zones ou des composants à réchauffer. Le limitateur 415 peut en outre être piloté par l'unité de contrôle.

L'exemple représenté sur la figure 5 diffère de l'exemple décrit en référence aux figures 2 et 3, en ce que la deuxième extrémité 410b du canal de dérivation 410 communique avec le premier canal de prélèvement 310, entre l'électrovanne 311 et le clapet anti retour 312. En outre, le canal de dérivation 410 comprend seulement une électrovanne 411, mais pas de clapet anti retour. Selon cette configuration, le transfert d'air du deuxième moteur 2 vers le premier moteur 1 est ainsi autorisé par l'ouverture de l'électrovanne 311 et de l'électrovanne 411, le canal de dérivation 410 agissant comme un pont (ou « bypass » en anglais) permettant de contourner le clapet anti retour 312 du premier canal de prélèvement 310.

Selon l'exemple représenté sur la figure 6, l'électrovanne 311 du premier canal de prélèvement 310 est remplacée par une vanne trois voies 311', mobile entre une première position (image de gauche sur la figure 6) permettant un écoulement d'air dans le premier canal de prélèvement 310 et empêchant un écoulement d'air dans le canal de dérivation 410, et une deuxième position (image de droite sur la figure 6) empêchant un écoulement d'air dans le premier canal de prélèvement 310 et permettant un écoulement d'air dans le canal de dérivation 410. Dans cet exemple, le canal de dérivation 410 est un conduit simple, sans électrovanne ou clapet anti retour. La vanne trois voies 311' est en outre de préférence également contrôlée par l'unité de contrôle.

Ainsi, hors mode ECO, la vanne trois voies 311' est placée dans sa première position, de manière à permettre un débit d'air q₁ depuis le premier point de prélèvement 313 (q₁' = 0). A l'inverse, en mode ECO, la vanne trois voies 311' est placée dans sa deuxième position, de manière à permettre un débit d'air q₁' depuis le deuxième moteur 2 vers le premier point de prélèvement 313 du premier moteur 1 (q₁ = 0).

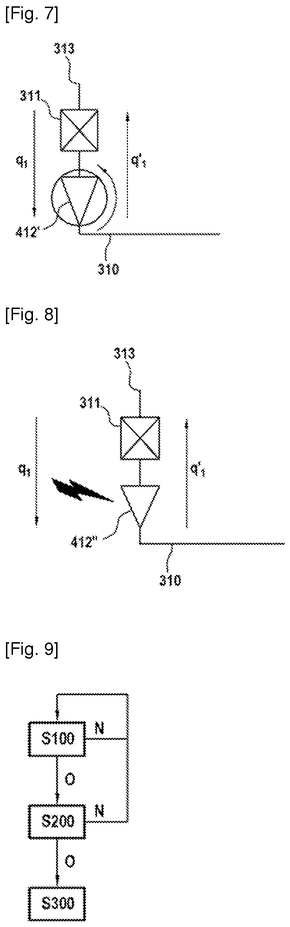

Selon l'exemple représenté sur la figure 7, le dispositif de dérivation du dispositif secondaire d'écoulement d'air 40 ne comprend pas de canal de dérivation, mais comprend un clapet anti retour mobile 412', disposé à la place du clapet anti retour 312 du premier canal de prélèvement 310. Le clapet anti retour mobile 412' est mobile, en pivotant sur lui-même, entre une première position permettant un écoulement d'air dans le premier canal de prélèvement 310 depuis le premier point de prélèvement 313 du premier moteur 1 vers le canal aval 330, et une deuxième position permettant un écoulement d'air depuis le deuxième moteur 2 vers le premier moteur 1. Le mouvement de rotation du clapet anti retour mobile 412' est représenté par la flèche courbe sur la figure 7.

On comprend en outre que dans la première position, le clapet anti retour mobile 412' empêche un écoulement d'air vers le premier point de prélèvement 313, et dans la deuxième position, le clapet anti retour mobile 412' empêche un écoulement d'air depuis le premier point de prélèvement 313 vers le canal aval 330. Ainsi, hors mode ECO, le clapet anti retour mobile 412' est maintenu dans la première position par l'unité de contrôle, et en mode ECO, le clapet anti retour mobile 412' est placé dans la deuxième position par l'unité de contrôle, pour autoriser un transfert d'air du deuxième moteur 2 vers le premier moteur 1, ce transfert étant par ailleurs permis par les différences de pressions existant entre ces moteurs.

L'exemple représenté sur la figure 8 diffère de l'exemple décrit en référence à la figure 7, en ce que le clapet anti retour mobile 412' est remplacé par un clapet anti retour blocable 412", configuré pour être bloqué et maintenu en position ouverte par l'unité de contrôle. Ainsi, en mode ECO, le clapet anti retour blocable 412" est maintenu en position ouverte par l'unité de contrôle, pour autoriser un transfert d'air du deuxième moteur 2 vers le premier moteur 1, ce transfert étant par ailleurs permis par les différences de pressions existant entre ces moteurs. A l'inverse, hors mode ECO, le clapet anti retour blocable 412" retrouve son fonctionnement normal, et empêche les retours d'air vers le premier moteur 1.

La figure 9 représente schématiquement les différentes étapes d'un procédé de gestion thermique de l'ensemble propulsif 100.

Dans un premier temps (étape S100), l'unité de contrôle détecte si l'un des moteurs fonctionne en régime de veille. S'il est détecté qu'aucun moteur fonctionne en régime de veille, correspondant à un fonctionnement hors mode ECO de l'ensemble propulsif (« N » à l'étape S100), le procédé retourne à l'étape S100.

S'il est détecté que l'un des moteurs fonctionne en régime de veille (« O » à l'étape S100), l'unité de contrôle détermine si l'ensemble propulsif 100 est en conditions de vol givrantes, ou si un critère de besoin de réchauffer la chambre de combustion, par exemple, est rempli (étape S200). Pour ce faire, l'unité de contrôle détecte si l'un au moins des capteurs mentionnés précédemment mesure une température inférieure ou égale à une valeur seuil prédéterminée. S'il est détecté qu'aucune de ces conditions n'est remplie, c'est-à-dire en l'absence de conditions de vol givrantes (« N » à l'étape S200), le procédé retourne à l'étape S100.

S'il est détecté qu'une au moins de ces conditions est remplie, impliquant l'existence de conditions de vol givrantes (« O » à l'étape S200), l'unité de contrôle autorise alors le transfert d'air du moteur actif vers le moteur fonctionnant en régime de veille (étape S300). Pour ce faire, l'unité de contrôle commande l'ouverture ou l'actionnement des vannes ou clapet anti retour mentionnés précédemment en référence au premier mode de réalisation ou aux différents exemples d'application du deuxième mode de réalisation, notamment l'électrovanne 411, la vanne trois voies 311', le clapet anti retour mobile 412', ou le clapet anti retour blocable 412".

On notera que le critère de besoin de réchauffer (étape S200) peut être basé sur la température interne du moteur en régime de veille, qui est à l'image de la température des composants, et/ou sur la température de l'huile utilisée pour le refroidissement du moteur, et/ou sur un critère de temps passé à une température donnée, ou éventuellement à la présence ou non de pluie associée à une altitude.

En outre, le prélèvement et le transfert d'air d'un moteur à l'autre (étape S300) peut être maintenu tant que les conditions détectées à l'étape S200 sont vraies, en tenant compte d'une hystérésis pour éviter les ouvertures et fermetures intempestives.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Ensemble propulsif (100) pour aéronef, notamment d'hélicoptère multi-moteurs, comprenant :
- au moins un premier moteur (1) et un deuxième moteur (2) configurés pour fonctionner dans au moins un régime de veille,
- un dispositif primaire de circulation d'air (30) configuré pour prélever de l'air dans le premier moteur (1) via un premier canal de prélèvement (310) et/ou dans le deuxième moteur (2) via un deuxième canal de prélèvement (320) pour l'acheminer vers un équipement de l'ensemble propulsif (100), et
- un dispositif secondaire de circulation d'air (40) configuré pour, lorsque l'un du premier ou du deuxième moteur (1, 2) fonctionne dans le au moins un régime de veille, prélever de l'air provenant de l'autre du premier ou du deuxième moteur (1, 2) ne fonctionnant pas en régime de veille et l'acheminer vers celui du premier ou du deuxième moteur (1, 2) fonctionnant en régime de veille,
dans lequel le dispositif secondaire de circulation d'air (40) comprend un dispositif de dérivation disposé sur l'un du premier ou du deuxième canal de prélèvement (310, 320), le premier et le deuxième canal de prélèvement (310, 320) comprennent une électrovanne (311, 321) et un clapet anti retour (312, 322), le dispositif de dérivation comprenant un canal de dérivation (410), une première extrémité (410a) du canal de dérivation (410) étant en communication avec ledit premier ou deuxième canal de prélèvement (310, 320) en aval du clapet anti retour (312, 322) dudit premier ou deuxième canal de prélèvement (310, 320), l'ensemble propulsif étant **caractérisé en ce que** le canal de dérivation comprend une électrovanne (411) et **en ce qu'**une deuxième extrémité (410b) du canal de dérivation (410) est en communication avec ledit premier ou deuxième canal de prélèvement (310, 320) en amont du clapet anti retour (312, 322).

2. Ensemble propulsif (100) selon la revendication 1, dans lequel le dispositif de dérivation est configuré pour permettre un écoulement d'air provenant de l'un du premier ou du deuxième moteur (1, 2) ne fonctionnant pas en régime de veille vers l'autre du premier ou du deuxième moteur (1, 2) fonctionnant en régime de veille, tout en empêchant un écoulement d'air dans un sens opposé.

3. Ensemble propulsif (100) selon la revendication 1 ou 2, la deuxième extrémité (410b) du canal de dérivation (410) étant en communication avec ledit premier ou deuxième canal de prélèvement (310, 320) entre l'électrovanne (311, 321) et le clapet anti retour (312, 322) dudit premier ou deuxième canal de prélèvement (310, 320).

4. Ensemble propulsif (100) selon la revendication 1 ou 2, dans lequel le premier et le deuxième canal de prélèvement (310, 320) sont configurés pour prélever de l'air du premier et du deuxième moteur (1, 2) en un point de prélèvement (313, 323) du premier et du deuxième moteur (1, 2) respectivement, le canal de dérivation (410) comprenant un clapet anti retour (412) monté en opposition avec le clapet anti retour (312, 322) du premier ou du deuxième canal de prélèvement (310, 320), la deuxième extrémité (410b) du canal de dérivation (410) étant en communication avec ledit premier ou deuxième canal de prélèvement (310, 320), entre l'électrovanne (311, 321) et le point de prélèvement (313, 323) dudit premier ou deuxième canal de prélèvement (310, 320).

5. Ensemble propulsif (100) pour aéronef, notamment d'hélicoptère multi-moteurs, comprenant :
- au moins un premier moteur (1) et un deuxième moteur (2) configurés pour fonctionner dans au moins un régime de veille,
- un dispositif primaire de circulation d'air (30) configuré pour prélever de l'air dans le premier moteur (1) via un premier canal de prélèvement (310) et/ou dans le deuxième moteur (2) via un deuxième canal de prélèvement (320) pour l'acheminer vers un équipement de l'ensemble propulsif (100), et
- un dispositif secondaire de circulation d'air (40) configuré pour, lorsque l'un du premier ou du deuxième moteur (1, 2) fonctionne dans le au moins un régime de veille, prélever de l'air provenant de l'autre du premier ou du deuxième moteur (1, 2) ne fonctionnant pas en régime de veille et l'acheminer vers celui du premier ou du deuxième moteur (1, 2) fonctionnant en régime de veille,
dans lequel le dispositif secondaire de circulation d'air (40) comprend un dispositif de dérivation disposé sur l'un du premier ou du deuxième canal de prélèvement (310, 320), le premier et le deuxième canal de prélèvement (310, 320) comprennent une électrovanne (311, 321) et un clapet anti retour (312, 322), le dispositif de dérivation comprenant un canal de dérivation (410) comprenant une électrovanne (411), une première extrémité (410a) du canal de dérivation (410) étant en communication avec ledit premier ou deuxième canal de prélèvement (310, 320) en aval du clapet anti retour (312, 322) dudit premier ou deuxième canal de prélèvement (310, 320), dans lequel le premier et le deuxième canal de prélèvement (310, 320) sont configurés pour prélever de l'air du premier et du deuxième moteur (1, 2) en un point de prélèvement (313, 323) du premier et du deuxième moteur (1, 2) respectivement, l'ensemble propulsif étant **caractérisé en ce que** le canal de dérivation comprend une électrovanne (411), un clapet anti retour (412) monté en opposition avec le clapet anti retour (312, 322) du premier ou du deuxième canal de prélèvement (310, 320), une deuxième extrémité (410b) du canal de dérivation (410) étant configuré pour injecter de l'air dans celui du premier ou du deuxième moteur (1, 2) fonctionnant en régime de veille, en un point d'injection (414) distinct du point de prélèvement (313, 323) et **en ce que** le canal de dérivation (410) comprend un limitateur (415) disposé entre le clapet anti retour (412) et le point d'injection (414), le limitateur (415) étant configuré pour réguler un débit d'air s'écoulant dans le canal de dérivation (410).

6. Ensemble propulsif (100) pour aéronef, notamment d'hélicoptère multi-moteurs, comprenant :
- au moins un premier moteur (1) et un deuxième moteur (2) configurés pour fonctionner dans au moins un régime de veille,
- un dispositif primaire de circulation d'air (30) configuré pour prélever de l'air dans le premier moteur (1) via un premier canal de prélèvement (310) et/ou dans le deuxième moteur (2) via un deuxième canal de prélèvement (320) pour l'acheminer vers un équipement de l'ensemble propulsif (100), et
- un dispositif secondaire de circulation d'air (40) configuré pour, lorsque l'un du premier ou du deuxième moteur (1, 2) fonctionne dans le au moins un régime de veille, prélever de l'air provenant de l'autre du premier ou du deuxième moteur (1, 2) ne fonctionnant pas en régime de veille et l'acheminer vers celui du premier ou du deuxième moteur (1, 2) fonctionnant en régime de veille,
dans lequel le dispositif secondaire de circulation d'air (40) comprend un dispositif de dérivation disposé sur l'un du premier ou du deuxième canal de prélèvement (310, 320), l'ensemble propulsif étant **caractérisé en ce que** le premier et le deuxième canal de prélèvement (310, 320) comprennent une vanne trois voies (311') et un clapet anti retour (312), le dispositif de dérivation comprenant un canal de dérivation (410), une première extrémité (410a) du canal de dérivation (410) étant en communication avec ledit premier ou deuxième canal de prélèvement (310, 320) en aval du clapet anti retour (312) dudit premier ou deuxième canal de prélèvement (310, 320), une deuxième extrémité (410b) du canal de dérivation (410) étant connectée à la vanne trois voies (311'), la vanne trois voies (311') étant mobile entre une première position permettant un écoulement d'air dans ledit premier ou deuxième canal de prélèvement (310, 320) et empêchant un écoulement d'air dans le canal de dérivation (410), et une deuxième position empêchant un écoulement d'air dans ledit premier ou deuxième canal de prélèvement (310, 320) et permettant un écoulement d'air dans le canal de dérivation (410).

7. Ensemble propulsif (100) pour aéronef, notamment d'hélicoptère multi-moteurs, comprenant :
- au moins un premier moteur (1) et un deuxième moteur (2) configurés pour fonctionner dans au moins un régime de veille,
- un dispositif primaire de circulation d'air (30) configuré pour prélever de l'air dans le premier moteur (1) via un premier canal de prélèvement (310) et/ou dans le deuxième moteur (2) via un deuxième canal de prélèvement (320) pour l'acheminer vers un équipement de l'ensemble propulsif (100), et
- un dispositif secondaire de circulation d'air (40) configuré pour, lorsque l'un du premier ou du deuxième moteur (1, 2) fonctionne dans le au moins un régime de veille, prélever de l'air provenant de l'autre du premier ou du deuxième moteur (1, 2) ne fonctionnant pas en régime de veille et l'acheminer vers celui du premier ou du deuxième moteur (1, 2) fonctionnant en régime de veille,
dans lequel le dispositif secondaire de circulation d'air (40) comprend un dispositif de dérivation disposé sur l'un du premier ou du deuxième canal de prélèvement (310, 320), le premier et le deuxième canal de prélèvement (310, 320) comprenant une électrovanne (311, 321), l'ensemble propulsif étant **caractérisé en ce que** le dispositif de dérivation comprend un clapet anti retour mobile (412') disposé sur le premier ou sur le deuxième canal de prélèvement (310, 320), le clapet anti retour mobile (412') étant mobile entre une première position permettant un écoulement d'air dans ledit premier ou deuxième canal de prélèvement (310, 320) dans un premier sens de circulation et empêchant un écoulement d'air dans un deuxième sens de circulation opposé au premier sens, et une deuxième position permettant un écoulement d'air dans le deuxième sens de circulation et empêchant un écoulement d'air dans le premier sens de circulation.

8. Ensemble propulsif (100) pour aéronef, notamment d'hélicoptère multi-moteurs, comprenant :
- au moins un premier moteur (1) et un deuxième moteur (2) configurés pour fonctionner dans au moins un régime de veille,
- un dispositif primaire de circulation d'air (30) configuré pour prélever de l'air dans le premier moteur (1) via un premier canal de prélèvement (310) et/ou dans le deuxième moteur (2) via un deuxième canal de prélèvement (320) pour l'acheminer vers un équipement de l'ensemble propulsif (100), et
- un dispositif secondaire de circulation d'air (40) configuré pour, lorsque l'un du premier ou du deuxième moteur (1, 2) fonctionne dans le au moins un régime de veille, prélever de l'air provenant de l'autre du premier ou du deuxième moteur (1, 2) ne fonctionnant pas en régime de veille et l'acheminer vers celui du premier ou du deuxième moteur (1, 2) fonctionnant en régime de veille,
dans lequel le dispositif secondaire de circulation d'air (40) comprend un dispositif de dérivation disposé sur l'un du premier ou du deuxième canal de prélèvement (310, 320), le premier et le deuxième canal de prélèvement (310, 320) comprenant une électrovanne (311, 321), l'ensemble propulsif étant **caractérisé en ce que** le dispositif de dérivation comprend un clapet anti retour blocable (412") disposé sur le premier ou sur le deuxième canal de prélèvement (310, 320), le clapet anti retour blocable (412") étant configuré pour être bloqué dans une position d'ouverture permettant un écoulement d'air dans deux sens de circulation.

9. Procédé de gestion thermique d'un ensemble propulsif (100) selon l'une quelconque des revendications précédentes, comprenant :
- la détection d'un fonctionnement dans au moins un régime de veille de l'un du premier moteur (1) ou du deuxième moteur (2),
- la mesure de la température d'au moins un composant dudit premier moteur (1) ou deuxième moteur (2) fonctionnant dans le régime de veille, et
- si la température mesurée est inférieure ou égale à une valeur seuil prédéterminée, le prélèvement d'air dans l'autre du premier moteur (1) ou du deuxième moteur (2) ne fonctionnant pas en régime de veille, et l'acheminement de l'air vers celui du premier moteur (1) ou du deuxième moteur (2) fonctionnant en régime de veille, par l'intermédiaire du dispositif secondaire de circulation d'air (40).

## Patentansprüche

1. Antriebsanordnung (100) für Luftfahrzeug, insbesondere einen mehrmotorigen Hubschrauber, umfassend:
- mindestens einen ersten Motor (1) und einen zweiten Motor (2), die konfiguriert sind, um in mindestens einem Bereitschaftszustand betrieben zu werden,
- eine primäre Luftzirkulationsvorrichtung (30), die konfiguriert ist, um über einen ersten Entnahmekanal (310) Luft aus dem ersten Motor (1) und/oder über einen zweiten Entnahmekanal (320) aus dem zweiten Motor (2) zu entnehmen, um sie zu einer Ausrüstung der Antriebsanordnung (100) zu leiten, und
- eine sekundäre Luftzirkulationsvorrichtung (40), die konfiguriert ist, um, wenn entweder der erste oder der zweite Motor (1, 2) in dem mindestens einen Standby-Modus betrieben wird, Luft aus dem anderen von dem ersten oder dem zweiten Motor (1, 2), der nicht in dem Standby-Modus betrieben wird, zu entnehmen und sie zu dem von dem ersten oder dem zweiten Motor (1, 2), der in dem Standby-Modus betrieben wird, zu leiten,
wobei die sekundäre Luftzirkulationsvorrichtung (40) eine Bypass-Vorrichtung umfasst, die an einem von dem ersten oder dem zweiten Entnahmekanal (310, 320) angeordnet ist, der erste und der zweite Entnahmekanal (310, 320) umfassend ein Magnetventil (311, 321) und ein Rückschlagventil (312, 322), die Bypass-Vorrichtung umfassend einen Bypass-Kanal (410),
wobei ein erstes Ende (410a) des Bypass-Kanals (410) mit dem ersten oder dem zweiten Entnahmekanal (310, 320) stromabwärts von dem Rückschlagventil (312, 322) des ersten oder des zweiten Entnahmekanals (310, 320) in Verbindung ist,
wobei die Antriebsanordnung **dadurch gekennzeichnet ist, dass** der Bypass-Kanal ein Magnetventil (411) umfasst und dass ein zweites Ende (410b) des Bypass-Kanals (410) mit dem ersten oder zweiten Entnahmekanal (310, 320) stromaufwärts von dem Rückschlagventil (312, 322) in Verbindung ist.

2. Antriebsanordnung (100) nach Anspruch 1, wobei die Bypass-Vorrichtung konfiguriert ist, um einen Luftstrom von einem von dem ersten oder dem zweiten Motor (1, 2), der nicht in dem Standby-Modus betrieben wird, zu dem anderen von dem ersten oder dem zweiten Motor (1, 2), der in dem Standby-Modus betrieben wird, zu ermöglichen, während sie einen Luftstrom in eine entgegengesetzte Richtung verhindert.

3. Antriebsanordnung (100) nach Anspruch 1 oder 2, wobei das zweite Ende (410b) des Bypass-Kanals (410) mit dem ersten oder dem zweiten Entnahmekanal (310, 320) zwischen dem Magnetventil (311, 321) und dem Rückschlagventil (312, 322) des ersten oder des zweiten Entnahmekanals (310, 320) in Verbindung ist.

4. Antriebsanordnung (100) nach Anspruch 1 oder 2, wobei der erste und der zweite Entnahmekanal (310, 320) konfiguriert sind, um jeweils an einer Entnahmestelle (313, 323) des ersten und des zweiten Motors (1, 2) Luft von dem ersten und dem zweiten Motor (1, 2) zu entnehmen, der Bypass-Kanal (410) umfassend ein Rückschlagventil (412), das gegenüber dem Rückschlagventil (312, 322) des ersten oder des zweiten Entnahmekanals (310, 320) montiert ist, wobei das zweite Ende (410b) des Bypass-Kanals (410) mit dem ersten oder dem zweiten Entnahmekanal (310, 320) zwischen dem Magnetventil (311, 321) und der Entnahmestelle (313, 323) des ersten oder des zweiten Entnahmekanals (310, 320) in Verbindung ist.

5. Antriebsanordnung (100) für Luftfahrzeug, insbesondere einen mehrmotorigen Hubschrauber, umfassend:
- mindestens einen ersten Motor (1) und einen zweiten Motor (2), die konfiguriert sind, um in mindestens einem Bereitschaftszustand betrieben zu werden,
- eine primäre Luftzirkulationsvorrichtung (30), die konfiguriert ist, um über einen ersten Entnahmekanal (310) Luft aus dem ersten Motor (1) und/oder über einen zweiten Entnahmekanal (320) aus dem zweiten Motor (2) zu entnehmen, um sie zu einer Ausrüstung der Antriebsanordnung (100) zu leiten, und
- eine sekundäre Luftzirkulationsvorrichtung (40), die konfiguriert ist, um, wenn entweder der erste oder der zweite Motor (1, 2) in dem mindestens einen Standby-Modus betrieben wird, Luft aus dem anderen von dem ersten oder dem zweiten Motor (1, 2), der nicht in dem Standby-Modus betrieben wird, zu entnehmen und sie zu dem von dem ersten oder dem zweiten Motor (1, 2), der in dem Standby-Modus betrieben wird, zu leiten,
wobei die sekundäre Luftzirkulationsvorrichtung (40) eine Bypass-Vorrichtung umfasst, die an einem von dem ersten oder dem zweiten Entnahmekanal (310, 320) angeordnet ist, der erste und der zweite Entnahmekanal (310, 320) umfassend ein Magnetventil (311, 321) und ein Rückschlagventil (312, 322), die Bypass-Vorrichtung umfassend einen Bypass-Kanal (410), umfassend ein Magnetventil (411), wobei ein erstes Ende (410a) des Bypass-Kanals (410) mit dem ersten oder dem zweiten Entnahmekanal (310, 320) stromabwärts von dem Rückschlagventil (312, 322) des ersten oder des zweiten Entnahmekanals (310, 320) in Verbindung ist, wobei der erste und der zweite Entnahmekanal (310, 320) konfiguriert sind, um jeweils an einer Entnahmestelle (313, 323) des ersten und des zweiten Motors (1, 2) Luft von dem ersten und dem zweiten Motor (1, 2) zu entnehmen,
wobei die Antriebsanordnung **dadurch gekennzeichnet ist, dass** der Bypass-Kanal ein Magnetventil (411), ein Rückschlagventil (412), das gegenüber dem Rückschlagventil (312, 322) des ersten oder zweiten Entnahmekanals (310, 320) montiert ist, umfasst, ein zweites Ende (410b) des Bypass-Kanals (410) konfiguriert ist, um Luft in jenen von dem ersten oder dem zweiten Motor (1, 2), der in dem Standby-Modus betrieben wird, an einer Einblasstelle (414) einzublasen, der von der Entnahmestelle (313, 323) getrennt ist, und dass der Bypass-Kanal (410) einen Begrenzer (415) umfasst, der zwischen dem Rückschlagventil (412) und der Einspritzstelle (414) angeordnet ist, wobei der Begrenzer (415) konfiguriert ist, um einen Luftstrom, der in den Bypass-Kanal (410) strömt, zu regulieren.

6. Antriebsanordnung (100) für Luftfahrzeug, insbesondere einen mehrmotorigen Hubschrauber, umfassend:
- mindestens einen ersten Motor (1) und einen zweiten Motor (2), die konfiguriert sind, um in mindestens einem Bereitschaftszustand betrieben zu werden,
- eine primäre Luftzirkulationsvorrichtung (30), die konfiguriert ist, um über einen ersten Entnahmekanal (310) Luft aus dem ersten Motor(1) und/oder über einen zweiten Entnahmekanal (320) aus dem zweiten Motor (2) zu entnehmen, um sie zu einer Ausrüstung der Antriebsanordnung (100) zu leiten, und
- eine sekundäre Luftzirkulationsvorrichtung (40), die konfiguriert ist, um, wenn entweder der erste oder der zweite Motor (1, 2) in dem mindestens einen Standby-Modus betrieben wird, Luft aus dem anderen von dem ersten oder dem zweiten Motor (1, 2), der nicht in dem Standby-Modus betrieben wird, zu entnehmen und sie zu dem von dem ersten oder dem zweiten Motor (1, 2), der in dem Standby-Modus betrieben wird, zu leiten,
wobei die sekundäre Luftzirkulationsvorrichtung (40) eine Bypass-Vorrichtung umfasst, die an einem von dem ersten oder dem zweiten Entnahmekanal (310, 320) angeordnet ist,
wobei die Antriebsanordnung **dadurch gekennzeichnet ist, dass** der erste und der zweite Entnahmekanal (310, 320) ein Dreiwegeventil (311') und ein Rückschlagventil (312) umfassen, die Bypass-Vorrichtung umfassend einen Bypass-Kanal (410), wobei ein erstes Ende (410a) des Bypass-Kanals (410) mit dem ersten oder dem zweiten Entnahmekanal (310, 320) stromabwärts von dem Rückschlagventil (312) des ersten oder des zweiten Entnahmekanals (310, 320) in Verbindung ist, ein zweites Ende (410b) des Bypass-Kanals (410) mit dem Dreiwegeventil (311') verbunden ist, das Dreiwegeventil (311') zwischen einer ersten Position, die einen Luftstrom in den ersten oder den zweiten Entnahmekanal (310, 320) ermöglicht und einen Luftstrom in den Bypass-Kanal (410) verhindert, und einer zweiten Position, die einen Luftstrom in den ersten oder zweiten Entnahmekanal (310, 320) verhindert und einen Luftstrom in den Bypass-Kanal (410) ermöglicht, bewegbar ist.

7. Antriebsanordnung (100) für Luftfahrzeug, insbesondere mehrmotorigen Hubschrauber, umfassend:
- mindestens einen ersten Motor (1) und einen zweiten Motor (2), die konfiguriert sind, um in mindestens einem Bereitschaftszustand betrieben zu werden,
- eine primäre Luftzirkulationsvorrichtung (30), die konfiguriert ist, um über einen ersten Entnahmekanal (310) Luft aus dem ersten Motor (1) und/oder über einen zweiten Entnahmekanal (320) aus dem zweiten Motor (2) zu entnehmen, um sie zu einer Ausrüstung der Antriebsanordnung (100) zu leiten, und
- eine sekundäre Luftzirkulationsvorrichtung (40), die konfiguriert ist, um, wenn entweder der erste oder der zweite Motor (1, 2) in dem mindestens einen Standby-Modus betrieben wird, Luft aus dem anderen von dem ersten oder dem zweiten Motor (1, 2), der nicht in dem Standby-Modus betrieben wird, zu entnehmen und sie zu dem von dem ersten oder dem zweiten Motor (1, 2), der in dem Standby-Modus betrieben wird, zu leiten,
wobei die sekundäre Luftzirkulationsvorrichtung (40) eine Bypass-Vorrichtung umfasst, die an einem von dem ersten oder dem zweiten Entnahmekanal (310, 320) angeordnet ist, der erste und der zweite Entnahmekanal (310, 320) umfassend ein Magnetventil (311, 321),
wobei die Antriebsanordnung **dadurch gekennzeichnet ist, dass** die Bypass-Vorrichtung ein bewegbares Rückschlagventil (412') umfasst, das an dem ersten oder dem zweiten Entnahmekanal (310, 320) angeordnet ist, das bewegbare Rückschlagventil (412') zwischen einer ersten Position, die einen Luftstrom in den ersten oder den zweiten Entnahmekanal (310, 320) in einer ersten Zirkulationsrichtung zulässt und einen Luftstrom in einer zweiten, der ersten Zirkulationsrichtung entgegengesetzten Zirkulationsrichtung verhindert, und einer zweiten Position, die einen Luftstrom in der zweiten Zirkulationsrichtung zulässt und einen Luftstrom in der ersten Zirkulationsrichtung verhindert, bewegbar ist.

8. Antriebsanordnung (100) für Luftfahrzeug, insbesondere mehrmotorigen Hubschrauber, umfassend:
- mindestens einen ersten Motor (1) und einen zweiten Motor (2), die konfiguriert sind, um in mindestens einem Bereitschaftszustand betrieben zu werden,
- eine primäre Luftzirkulationsvorrichtung (30), die konfiguriert ist, um über einen ersten Entnahmekanal (310) Luft aus dem ersten Motor (1) und/oder über einen zweiten Entnahmekanal (320) aus dem zweiten Motor (2) zu entnehmen, um sie zu einer Ausrüstung der Antriebsanordnung (100) zu leiten, und
- eine sekundäre Luftzirkulationsvorrichtung (40), die konfiguriert ist, um, wenn entweder der erste oder der zweite Motor (1, 2) in dem mindestens einen Standby-Modus betrieben wird, Luft aus dem anderen von dem ersten oder dem zweiten Motor (1, 2), der nicht in dem Standby-Modus betrieben wird, zu entnehmen und sie zu dem von dem ersten oder dem zweiten Motor (1, 2), der in dem Standby-Modus betrieben wird, zu leiten,
wobei die sekundäre Luftzirkulationsvorrichtung (40) eine Bypass-Vorrichtung umfasst, die an einem von dem ersten oder dem zweiten Entnahmekanal (310, 320) angeordnet ist, der erste und der zweite Entnahmekanal (310, 320) umfassend ein Magnetventil (311, 321),
wobei die Antriebsanordnung **dadurch gekennzeichnet ist, dass** die Bypass-Vorrichtung ein blockierbares Rückschlagventil (412") umfasst, das an dem ersten oder dem zweiten Entnahmekanal (310, 320) angeordnet ist, wobei das blockierbare Rückschlagventil (412") konfiguriert ist, um in einer offenen Position blockiert zu werden, die einen Luftstrom in zwei Zirkulationsrichtungen ermöglicht.

9. Verfahren zum Wärmemanagement einer Antriebsanordnung (100) nach einem der vorherigen Ansprüche, umfassend:
- ein Erkennen eines Betriebs in mindestens einem Standby-Modus entweder des ersten Motors (1) oder des zweiten Motors (2),
- ein Messen der Temperatur von mindestens einer Komponente des ersten Motors (1) oder des zweiten Motors (2), der in dem Standby-Modus betrieben wird, und
- wenn die gemessene Temperatur kleiner als oder gleich wie ein vorbestimmter Schwellenwert ist, ein Entnehmen von Luft aus dem anderen von dem ersten Motor (1) oder dem zweiten Motor (2), der nicht im Standby-Modus betrieben wird, und ein Leiten der Luft zu der des ersten Motors (1) oder des zweiten Motors (2), der in dem Standby-Modus betrieben wird, über die sekundäre Luftzirkulationsvorrichtung (40).

## Claims

1. A propulsion assembly (100) for an aircraft, particularly for a multi-engine helicopter, comprising:
- at least one first engine (1) and a second engine (2) configured to operate in at least one standby mode,
- a primary air circulation device (30) configured to bleed air from the first engine (1) via a first bleed channel (310) and/or from the second engine (2) via a second bleed channel (320) for conveying it to equipment of the propulsion assembly (100), and
- a secondary air circulation device (40) configured, when one of the first or the second engine (1, 2) operates in the at least one standby mode, to bleed air originating from the other of the first or the second engine (1, 2) not operating in standby mode and to convey it to the first or the second engine (1, 2) operating in standby mode,
wherein the secondary air circulation device (40) comprises a bypass device arranged on one of the first or the second bleed channel (310, 320), the first and the second bleed channel (310, 320) comprise a solenoid valve (311, 321) and a check valve (312, 322), the bypass device comprising a bypass channel (410), a first end (410a) of the bypass channel (410) being in communication with said first or second bleed channel (310, 320) downstream of the check valve (312, 322) of said first or second bleed channel (310, 320), the propulsion assembly being **characterized in that** the bypass channel comprises a solenoid valve (411) and **in that** a second end (410b) of the bypass channel (410) is in communication with said first or second bleed channel (310, 320) upstream of the check valve (312, 322).

2. The propulsion assembly (100) according to claim 1, wherein the bypass device is configured to allow an air flow originating from one of the first or second engine (1, 2) not operating in standby mode to the other of the first or second engine (1, 2) operating in standby mode, while preventing an air flow in the opposite direction.

3. The propulsion assembly (100) according to claim 1 or 2, the second end (410b) of the bypass channel (410) being in communication with said first or second bleed channel (310, 320) between the solenoid valve (311, 321) and the check valve (312, 322) of said first or second bleed channel (310, 320).

4. The propulsion assembly (100) according to claim 1 or 2, wherein the first and the second bleed channel (310, 320) are configured to bleed air from the first and from the second engine (1, 2) at a bleed point (313, 323) of the first and the second engine (1, 2) respectively, the bypass channel (410) comprising a check valve (412) mounted in opposition to the check valve (312, 322) of the first or the second bleed channel (310, 320), the second end (410b) of the bypass channel (410) being in communication with said first or second bleed channel (310, 320), between the solenoid valve (311, 321) and the bleed point (313, 323) of said first or second bleed channel (310, 320).

5. A propulsion assembly (100) for an aircraft, particularly a multi-engine helicopter, comprising:
- at least one first engine (1) and a second engine (2) configured to operate in at least one standby mode,
- a primary air circulation device (30) configured to bleed air from the first engine (1) via a first bleed channel (310) and/or from the second engine (2) via a second bleed channel (320) to convey it to equipment of the propulsion assembly (100), and
- a secondary air circulation device (40) configured, when one of the first or second engines (1, 2) operates in the at least one standby mode, to bleed air originating from the other of the first or second engine (1, 2) not operating in standby mode and to convey it to the first or second engine (1, 2) operating in standby mode,
wherein the secondary air circulation device (40) comprises a bypass device arranged on one of the first or the second bleed channel (310, 320), the first and the second bleed channel (310, 320) comprise a solenoid valve (311, 321) and a check valve (312, 322), the bypass device comprising a bypass channel (410) comprising a solenoid valve (411), a first end (410a) of the bypass channel (410) being in communication with said first or second bleed channel (310, 320) downstream of the check valve (312, 322) of said first or second bleed channel (310, 320), wherein the first and the second bleed channel (310, 320) are configured to bleed air from the first and the second engine (1, 2) at a bleed point (313, 323) of the first and the second engine (1, 2) respectively, the propulsion assembly being **characterized in that** the bypass channel comprises a solenoid valve (411), a check valve (412) mounted in opposition to the check valve (312, 322) of the first and second bleed channel (310, 320), a second end (410b) of the bypass channel (410) being configured to inject air into the first or second engine (1, 2) operating in standby mode, at an injection point (414) distinct from the bleed point (313, 323), and **in that** the bypass channel (410) comprises a limiter (415) arranged between the check valve (412) and the injection point (414), the limiter (415) being configured to regulate a flow rate of air flowing in the bypass channel (410).

6. A propulsion assembly (100) for an aircraft, particularly for a multi-engine helicopter, comprising:
- at least one first engine (1) and a second engine (2) configured to operate in at least one standby mode,
- a primary air circulation device (30) configured to bleed air from the first engine (1) via a first bleed channel (310) and/or from the second engine (2) via a second bleed channel (320) to convey it to equipment of the propulsion assembly (100), and
- a secondary air circulation device (40) configured, when one of the first or the second engine (1, 2) operates in the at least one standby mode, to bleed air originating from the other of the first or the second engine (1, 2) not operating in standby mode and convey it to the first or the second engine (1, 2) operating in standby mode,
wherein the secondary air circulation device (40) comprises a bypass device arranged on one of the first or the second bleed channel (310, 320), the propulsion assembly being **characterized in that** the first and the second bleed channel (310, 320) comprise a three-way valve (311') and a check valve (312), the bypass device comprising a bypass channel (410), a first end (410a) of the bypass channel (410) being in communication with said first or second bleed channel (310, 320) downstream of the check valve (312) of said first or second bleed channel (310, 320), a second end (410b) of the bypass channel (410) being connected to the three-way valve (311'), the three-way valve (311') being movable between a first position allowing an air flow in said first or second bleed channel (310, 320) and preventing an air flow in the bypass channel (410), and a second position preventing an air flow in said first or second bleed channel (310, 320) and allowing an air flow in the bypass channel (410).

7. A propulsion assembly (100) for an aircraft, particularly for a multi-engine helicopter, comprising:
- at least one first engine (1) and a second engine (2) configured to operate in at least one standby mode,
- a primary air circulation device (30) configured to bleed air from the first engine (1) via a first bleed channel (310) and/or from the second engine (2) via a second bleed channel (320) to convey it to equipment of the propulsion assembly (100), and
- a secondary air circulation device (40) configured, when one of the first or the second engine (1, 2) operates in the at least one standby mode, to bleed air originating from the other of the first or the second engine (1, 2) not operating in standby mode and to convey it to the first or the second engine (1, 2) operating in standby mode,
wherein the secondary air circulation device (40) comprises a bypass device arranged on one of the first or the second bleed channel (310, 320), the first and the second bleed channel (310, 320) comprising a solenoid valve (311, 321), the propulsion assembly being **characterized in that** the bypass device comprises a movable check valve (412') arranged on the first or on the second bleed channel (310, 320), the movable check valve (412') being movable between a first position allowing an air flow in said first or second bleed channel (310, 320) in a first circulation direction and preventing an air flow in a second circulation direction, opposite to the first direction, and a second position allowing an air flow in the second circulation direction and preventing an air flow in the first circulation direction.

8. A propulsion assembly (100) for an aircraft, particularly a multi-engine helicopter, comprising:
- at least one first engine (1) and a second engine (2) configured to operate in at least one standby mode,
- a primary air circulation device (30) configured to bleed air from the first engine (1) via a first bleed channel (310) and/or from the second engine (2) via a second bleed channel (320) to convey it to equipment of the propulsion assembly (100), and
- a secondary air circulation device (40) configured, when one of the first or the second engine (1, 2) operates in the at least one standby mode, to bleed air originating from the other of the first or second engine (1, 2) not operating in standby mode and to convey it to the first or the second engine (1, 2) operating in standby mode,
wherein the secondary air circulation device (40) comprises a bypass device arranged on one of the first or the second bleed channel (310, 320), the first and the second bleed channel (310, 320) comprising a solenoid valve (311, 321), the propulsion assembly being **characterized in that** the bypass device comprises a blockable check valve (412") arranged on the first or the second bleed channel (310, 320), the blockable check valve (412") being configured to be blocked in an open position allowing an air flow in two circulation directions.

9. A thermal management method for a propulsion assembly (100) according to any one of the previous claims, comprising:
- detecting operation in at least one standby mode by one of the first engine (1) or the second engine (2),
- measuring the temperature of at least one component of said first engine (1) or second engine (2) operating in the standby mode, and
- if the measured temperature is less than or equal to a predetermined threshold value, bleeding air from the other of the first engine (1) or the second engine (2) not operating in standby mode, and conveying air to the first engine (1) or the second engine (2) operating in standby mode, by means of the secondary air circulation device (40).
